# EUROPÄISCHE PATENTANMELDUNG

(11) **EP 0 543 217 A1**
(43) Veröffentlichungstag der Anmeldung: **26.05.1993**
(21) Anmeldenummer: 92118841.3
(22) Anmeldetag: 04.11.1992
(51) Int. Cl.: A01M 7/00

(54) **Gezogene landwirtschaftliche Feldspritze**

(30) Priorität: 22.11.1991 DE 4138361
(71) Anmelder: Amazonen-Werke H. Dreyer GmbH & Co. KG, D-49205 Hasbergen (DE)
(72) Erfinder: Dreyer, Heinz, Dipl.-Ing. Dr., W-4507 Hasbergen (DE)

(57) **Zusammenfassung**

Gezogene landwirtschaftliche Feldspritze mit einem Rahmen, einem Laufräder (4) aufweisenden Fahrgestell, mit einer Anhängedeichsel (5), einem Vorratsbehälter (9), sowie einem hinter dem Vorratsbehälter (9) an dem Rahmen (3) der Feldspritze (2) angeordneten ein- und ausklappbaren Verteilergestänge (12). Um eine vorteilhafte Anordnung des Verteilergestänges zu erreichen, ist vorgesehen, daß das Verteilergestänge (12) in seiner für den Transport eingeklappten Stellung nur eine derartige Breite (B) aufweist, daß das Verteilergestänge (12) in dieser Stellung die äußersten Seitenteile (4) der Feldspritze (2) seitlich nicht überragt

## Beschreibung

Die Erfindung betrifft eine gezogene landwirtschaftliche Feldspritze gemäß der Oberbegriffe der Patentansprüche 1 und 9.

Von Ackerschleppern gezogene landwirtschaftliche Feldspritzen sind in Praxis bekannt. Die Verteilergestänge dieser landwirtschaftlichen Feldspritzen weisen in der zusammengeklappten Stellung des Verteilergestänges eine größere Breite als die Feldspritze bzw. des die Feldspritze ziehenden Schleppers auf. Vielfach befinden sich diese Verteilergestänge in eingeklappter Stellung auch neben der Feldspritze.

Der Erfindung liegt die Aufgabe zugrunde, eine vorteilhafte Anordnung des Verteilergestänges zu erreichen.

Diese Aufgabe wird erfindungsgemäß dadurch gelöst, daß das Verteilergestänge in seiner für den Transport eingeklappten Stellung nur eine derartige Breite aufweist, daß das Verteilergestänge in dieser Stellung die äußersten Seitenteile der Feldspritze seitlich nicht überragt. Hierdurch wird ein äußerst kompakt ausgebildetes Verteilergestänge für die Transportstellung geschaffen. Hierbei ist in einer vorteilhaften Ausführung das Verteilergestänge so bemessen, daß es die Breite des die Feldspritze ziehenden Schleppers nicht überschreitet. Durch diese Ausbildung des Verteilergestänges ergibt sich eine geschützte Anordnung für das Verteilergestänge bei der Transportfahrt.

In vorteilhafter Weise ist das Verteilergestänge mit einem Schnellkuppelsystem an dem Rahmen der Feldspritze befestigt. Durch diese Maßnahme ist es auf einfache Weise möglich, verschiedene Verteilergestänge an den Rahmen der Feldspritze anzuordnen. Auch kann auf einfache Weise, falls das Verteilergestänge beschädigt ist, über das Schnellkuppelsystem ein Austauschgestänge am Rahmen befestigt werden. In einer Ausführungsform ist vorgesehen, daß das Schnellkuppelsystem zwei beabstandete Fangelemente und mindestens ein in einem Abstand zu den Fangelementen angeordnetes leicht lösbares Sicherungselement aufweist.

Um ein äußerst einfaches und schnelles Abkuppeln sowie Ankuppeln des Verteilergestänges an die Feldspritze zu erreichen, ist ebenfalls für die Zuleitungen zu dem Verteilergestänge ein Schnellkuppelsystem vorgesehen, über die die Zuleitungen mit den am Rahmen befestigten Zuleitungen verbunden werden können. Um das Verteilergestänge leicht zu demontieren oder montieren zu können, ist vorgesehen, daß an dem Verteilergestänge Abstellelemente anzuordnen sind.

Weitere Einzelheiten der Erfindung sind den übrigen Unteransprüchen, der Beispielsbechreibung und den Zeichnungen zu entnehmen. Hierbei zeigen
- Fig. 1: den landwirtschaftlichen Zugverband, bestehend aus einem Ackerschlepper und einer Feldspritze in der Draufsicht und in Prinzipdarstellung,
- Fig. 2: das Verteilergestänge im teilweise eingeklappten Zustand, wobei die äußersten Abschnitte um aufrechte Achsen zusammengeklappt sind, in der Draufsicht,
- Fig. 3: die Feldspritze mit dem zusammengeklappten Spritzgestänge in der Draufsicht,
- Fig. 4: die Feldspritze in der Ansicht von hinten mit sich in Transportstellung befindlichen Verteilergestängen in der Ansicht von hinten,
- Fig. 5: den landwirtschaftlichen Zugverband mit dem sich in Transportstellung befindlichen Verteilergestänge in der Draufsicht und
- Fig. 6: das Schnellkuppelsystem, über welches das Verteilergestänge an dem Rahmen der Feldspritze angeordnet ist in der Seitenansicht in vergrößertem Maßstab.

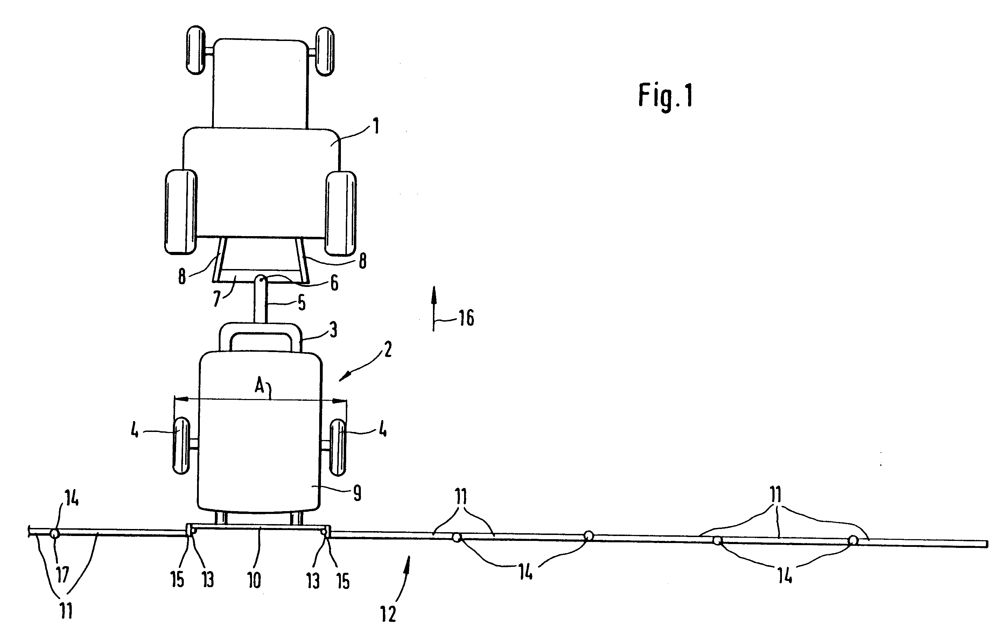

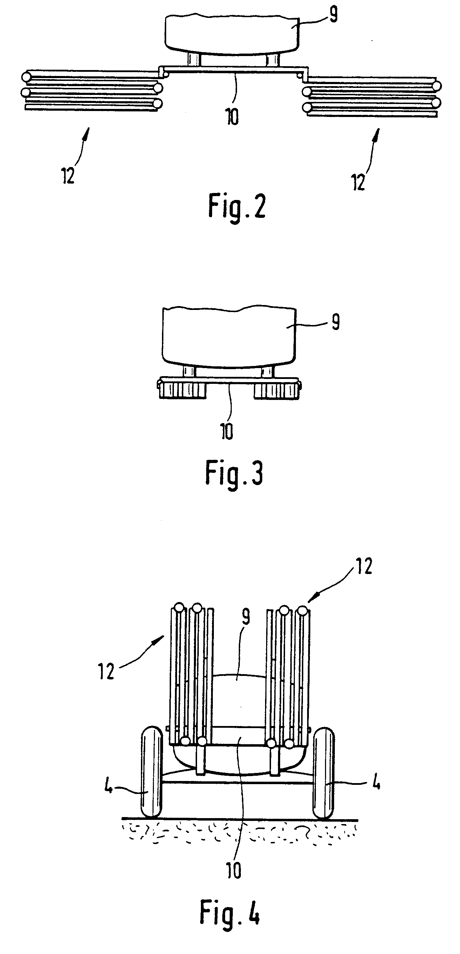

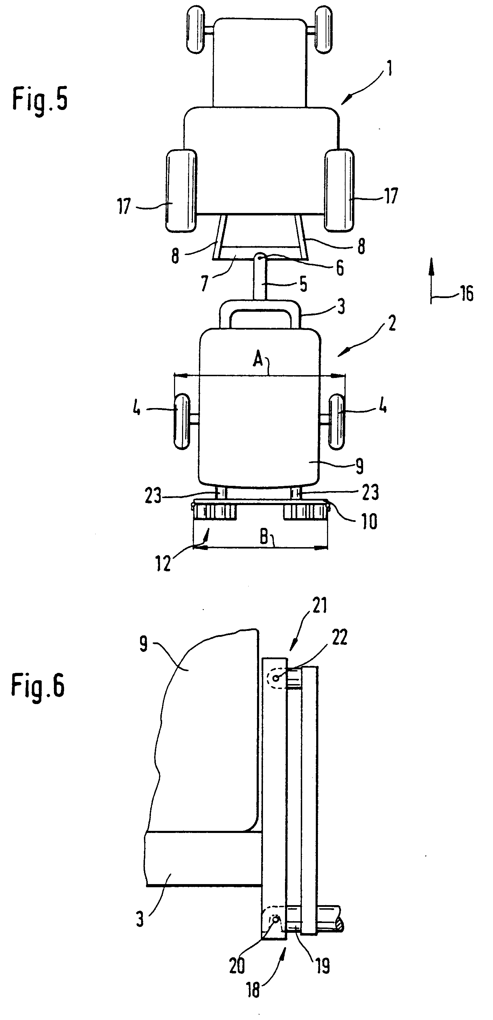

Der landwirtschaftliche Zugverband besteht aus dem Ackerschlepper 1 und der angehängten landwirtschaftlichen Feldspritze 2. Die Feldspritze 2 weist den Rahmen 3, das die Laufräder 4 aufweisende Fahrgestell sowie die Anhängedeichsel 5 auf. Über die Anhängedeichsel 5 ist die Feldspritze mit dem Bolzen 6 an der Ackerschiene 7, die in den Unterlenkern 8 des Dreipunktkrafthebers des Ackerschleppers 1 angeordnet ist, angehängt. Die landwirtschaftliche Feldspritze 2 weist den auf dem Rahmen 3 angeordneten Vorratsbehälter 9 auf. Hinter dem Vorratsbehälter 9 ist an dem Rahmen 3 der Feldspritze 2 das aus zueinander ein- und ausklappbaren Abschnitten 10 und 11 bestehende Verteilergestänge 12 angeordnet. Das Verteilergestänge 12 kann in nicht dargestellter Weise in Höhenrichtung verstellbar angeordnet sein. Das Verteilergestänge 12 ist in mehrere Abschnitte 10 und 11 unterteilt, die mittels der Gelenke 13 und 14 miteinander verbinden sind. Der innerste Abschnitt 11 des Verteilergestänges 2 ist an dem Basisstück 10 des Verteilergestänges 2 mit dem Gelenk 13 jeweils angeordnet. Die Schwenkachse 15 des Gelenkes 13 verläuft in Fahrtrichtung 16, während die Schwenkachse 17 der übrigen Gelenke 14 aufrecht verläuft Die an dem innersten Abschnitt sich anschließenden Abschnitte des Verteilergestänges 12 sind mit den Gelenken 14 miteinander verbunden. Somit kann das Verteilergestänge 2 aus der in Fig. 1 dargestellten gestreckten Lage (Arbeitsstellung) in die in Fig. 2 dargestellte Lage zunächst zusammengefaltet werden. Wenn das Verteilergestänge in die in Fig. 2 dargestellte Position zusammengefaltet ist, so werden die beiden zusammengefalteten Pakete des Verteilergestänges um die Gelenkachse 15 der Gelenke 13 in die in Fig. 3 und 4 dargestellte Position hochgeklappt. In dieser eingeklappten Position, wie sie in den Fig. 3 bis 5 dargestellt ist, überragt das Verteilergestänge 2 in seiner Transportstellung die äußersten Seitenteile, die von den Laufrädern 4 gebildet werden, der Feldspritze 2 nicht. Das Verteilergestänge 12 ist also in seiner Transportstellung quer zur Fahrtrichtung 16 schmaler als das größte Quermaß A der Feldspritze 2. Ebenfalls weist das Gestänge 12 in seiner für den Transport eingeklappten Stellung nur eine derartige Breite B auf, wie insbesondere der Fig. 5 zu entnehmen ist, so daß das Verteilergestänge 12 in dieser Stellung die äußersten Seitenteile (Laufräder 17) des Ackerschleppers seitlich nicht überragt. Somit befindet sich also das sich in Transportstellung befindliche Verteilerstänge 12 im Schatten der Feldspritze 2 und des Ackerschleppers 1. In vorteilhafter Weise ist das äußere Seitenmaß B des eingeklappten Verteilergestänges kleiner als 2,50 m.

Das Verteilergestänge ist mit dem in Fig. 6 dargestellten Schnellkuppelsystem 18 an dem Rahmen 3 der Feldspritze 2 befestigt. Das Schnellkuppelsystem 18 weist auf der unteren Seite die zwei beabstandeten Fangelemente 19, die mit dem Bolzen zusammenwirken auf. Im Abstand zu den Fangelementen 19 ist das leicht lösbare Sicherungselement 21, welches von einem Bolzen 22 gebildet wird, gesichert. An den beiden Tragbolzen 23 ist das Verteilergestänge 12 befestigt.

Weiterhin sind die Zuleitungen, die am Rahmen 3 der Feldspritze 2 in nicht dargestellter Weise verlegt sind, zu den Leitungen des Verteilergestänges 12 über ein Schnellkuppelsystem miteinander verbunden. Somit kann auf einfache Weise durch Lösen der Zuleitungen über das Schnellkuppelsystem und dem Schnellkuppelsytem das Verteilergestänge 12 einfach an- und abgebaut werden. Zum An- und Abbau sind an dem Verteilergestänge 12 nicht dargestellte Abstellfüße anzuordnen.

## Patentansprüche

1. Gezogene landwirtschaftliche Feldspritze mit einem Rahmen, einem Laufräder (4) aufweisenden Fahrgestell, mit einer Anhängedeichsel (5), einem Vorratsbehälter (9), sowie einem hinter dem Vorratsbehälter (9) an dem Rahmen (3) der Feldspritze (2) angeordneten ein- und ausklappbaren Verteilergestänge (12), dadurch gekennzeichnet, daß das Verteilergestänge (12) in seiner für den Transport eingeklappten Stellung nur eine derartige Breite (B) aufweist, daß das Verteilergestänge (12) in dieser Stellung die äußersten Seitenteile (4) der Feldspritze (2) seitlich nicht überragt.

2. Feldspritze nach Anspruch 1, dadurch gekennzeichnet, daß das Verteilergestänge (12) in seiner Transportstellung quer zur Fahrtrichtung (16) schmaler als das größte Quermaß (A) der Feldspritze (2) ist.

3. Feldspritze nach Anspruch 1, dadurch gekennzeichnet, daß das Verteilergestänge (12) mit einem Schnellkuppelsystem (18) an dem Rahmen (3) der Feldspritze (2) befestigt ist.

4. Feldspritze nach Anspruch 3, dadurch gekennzeichnet, daß das Schnellkuppelsystem (18) zwei beabstandete Fangelemente (19) und zumindest ein in einem Abstand zu den Fangelementen (19) angeordnetes leicht lösbares Sicherungselement (21) aufweist.

5. Feldspritze nach Anspruch 3, dadurch gekennzeichnet, daß die Zuleitungen zu dem Verteilergestänge über ein Schnellkuppelsystem mit an dem Rahmen (3) befestigten Zuleitungen verbunden sind.

6. Feldspritze nach Anspruch 1, dadurch gekennzeichnet, daß an dem Verteilergestänge (12) Abstellelemente anzuordnen sind.

7. Feldspritze nach Anspruch 1, dadurch gekennzeichnet, daß die seitlich angeordneten Abschnitte des Verteilergestänges (12) mittels aufrechter Achsen (14) aufweisenden Gelenke (17) zusammenfaltbar sind, daß der innerste Abschnitt des Verteilergestänges (12) mittels einem eine in Fahrtrichtung (16) weisende Achse (15) aufweisenden Gelenk (13) befestigt ist, so daß die zusammengefalteten Abschnitte des Verteilergestänges (12) in eine aufrechte Stellung zum Zwecke des Transportes bringbar sind.

8. Feldspritze nach Anspruch 1, dadurch gekennzeichnet, daß das zusammengeklappte Verteilergestänge (12) eine Breite (B) von maximal 2,50 m aufweist.

9. Landwirtschaftlicher Zugverband, bestehend aus einem Ackerschlepper und einer an dem Ackerschlepper angehängten Feldspritze mit einem Rahmen, einem Laufräder aufweisenden Fahrgestell, mit einer Anhängedeichsel, einem Vorratsbehälter, sowie einem hinter dem Vorratsbehälter an dem Rahmen der Feldspritze angeordneten ein- und ausklappbaren Verteilergestänge, dadurch gekennzeichnet, daß das Verteilergestänge (12) in seiner für den Transport eingeklappten Stellung nur eine derartige Breite (B) aufweist, daß das Verteilergestänge (12) in dieser Stellung die äußersten Seitenteile (17) des Ackerschleppers (1) seitlich nicht überragt.
